# EUROPEAN PATENT APPLICATION

(11) **EP 3 410 735 A1**
(43) Date of publication of application: **05.12.2018**
(21) Application number: 17305657.3
(22) Date of filing: 02.06.2017
(51) Int. Cl.: H04Q 11/00

(54) **OPTICAL SWITCHING SYSTEM AND DATA CENTER INCLUDING THE SAME**

(71) Applicant: Nokia Solutions and Networks Oy, 02610 Espoo (FI)
(72) Inventor: CHIARONI, Dominique, 91620 NOZAY (FR); KLEIN, Thierry Etienne, 91620 NOZAY (FR); BERDE, Bela, 91620 NOZAY (FR)
(74) Representative: Loyer & Abello

(57) **Abstract**

An optical switching system comprising an optical cross-connect (1), a plurality of optical transmit multiplexers each having a plurality of data ports and a common port connected to a corresponding one of the plurality of input ports, a plurality of optical receive multiplexers each having a plurality of data ports and a common port connected to a corresponding one of the plurality of output ports, a plurality of optical transmitters each being optically coupled to a corresponding one of the data ports of the transmit multiplexers, and a plurality of optical receivers each being optically coupled to a corresponding one of the data ports of the receive multiplexers.

## Description

### Field of the invention

The invention relates to the technical field of computer networks, and more particularly, but not exclusively, to data center systems and networks.

### Background

This section introduces aspects that may be helpful to facilitating a better understanding of embodiments herein. Accordingly, the statements of this section are to be read in this light and are not to be understood as admissions about what is in the prior art or what is not in the prior art.

The supporting technology of data center network (DCN) interconnection can be generally classified into two categories: electrical switching, and optical wiring.

Conventional three-tier electronic switch architecture or three-tier DCN architecture typically follows a multi-rooted tree-based network topology composed of three layers of network switches, namely access, aggregate, and core layers.

Generally, the electrical switching-based data center network may perform reasonably well under a high oversubscription ratio. However, the system is subject to a serious scalability problem in terms of switching capacity and power consumption with increasing numbers of servers and/or tops of racks.

Wavelength switching is relatively mature, but its coarse switching granularity prevents it from efficiently switching the bursty and fine-granularity data center network traffic.

Data storage reorganization methods may be performed to optimize the data storage in the data center network. However, data storage reorganization generates intra data center traffic.

In some conventional approaches, the same electronic switching network is used for intra data center traffic. Additional aggregation layer switches may be added to support an overload generated by intra data center traffic. This solution requires an integrated management and control plane that takes into account the existing real-time traffic crossing the intra data center interconnection layer.

Such a conventional approach may not be sufficiently flexible since it is dependent on physical bit rate. Moreover it may have a negative impact on the real-time traffic crossing the intra data center interconnection layer.

### Summary

The inventors disclose various apparatus and methods that may be beneficial applied to data center networking. While such embodiments may be expected to provide improvements in terms of performance and/or reduction of cost of relative to conventional approaches, no particular result is a requirement of the present invention unless explicitly recited in a particular claim.

Various embodiments provide an optical cross-connect (OxC), e.g. an optical space switch matrix (OSSM), that interconnects some of the data servers in the data center through an optical multiplexing/demultiplexing (mux/demux) interface. The OxC may be controlled by a master server to offer additional functionalities for optimizing the resource use of a data center.

Embodiments provide an optical switching system that utilizes an optical cross-connect, e.g. to interconnect servers in a datacenter. The system includes an optical cross-connect, a plurality of optical transmit multiplexers, and a plurality of optical receive multiplexers. The cross-connect has a plurality of input ports and a plurality of output ports. Each of the transmit and receive multiplexers has a plurality of data ports and a common port. The common port of each transmit multiplexer is optically coupled to a corresponding one of the input ports of the cross-connect. The common port of each receive multiplexer is optically coupled to a corresponding one of the output ports of the cross-connect. Each of the data ports of the transmit multiplexers is optical coupled to an optical transmitter, and each of the data ports of the receive multiplexers is optical coupled to an optical receiver. Each transmitter/receiver pair may be coupled to a data path of a data server, thus providing the master server the ability to create an optical data path between any two data servers of a data center.

Embodiments may provide a low cost, low power consumption method for optimizing the data storage in a data center. Indeed, various embodiments may be implemented using relatively low cost optical components.

This technique may be particularly beneficial for two purposes:
- to regroup data and/or defragment the data, e.g. thereby reducing latency of data access during routine data access and storage operations
- to consolidate sleeping data on specific servers, e.g. thereby making it possible to put some servers in a sleep mode for power reduction.

In some embodiments, each of the optical transmitters includes a Reflective Semiconductor Optical Amplifier -RSOA- light source, wherein a laser is formed between a mirror of the RSOA and a mirror coupled to the common port of the corresponding transmit multiplexer. This implementation of the laser is expected to be particularly economical.

In some embodiments, each optical transmitter and each optical receiver are coupled to a data path within a corresponding one of a plurality of data servers, and the optical cross-connect is configured to selectively interconnect the data servers.

In some embodiments, the optical switching system further comprises a master server configured to control the optical cross-connect to reconfigure interconnectivity between the data servers, e.g. to quickly and economically move data between data servers to realize the previously described benefits.

In some embodiments, the master server is configured to control the optical cross-connect to successively connect the master server with each data server of a group of data servers. The master server analyzes the data stored in each data server of the group of data servers, and identifies data that when transferred between a first data server and a second data server, causes the performance of the data center to be improved, e.g. by optimizing the storage of the data in the data center network. The master server may then configure the optical cross-connect to configure an optical data path between the first and second data servers, and direct a command to the first data server to execute a data transfer to the second data server.

In various embodiments, the master server is configured to successively and/or repeatedly connect to each data server in different subgroups of the group of data servers to achieve a desired reconfiguration of the data.

In some embodiments, some of the plurality of data servers are logically organized into wavelength groups of data servers, wherein all the data servers belonging to a same wavelength group have an optical transmitter/receiver pair configured to respectively emit and receive optical signals on a same wavelength channel. Some of the plurality of data servers are also grouped into physical groups of data servers, wherein all the data servers belonging to a same physical group are configured to emit and receive optical signals on a different wavelength channel. The data servers in a same physical group are connected to a same optical cross-connect input port through a same transmit multiplexer and to the same optical cross-connect output port through a same receive multiplexer. In some embodiments the group of data servers on which the data is reorganized is a wavelength group or a subgroup of a wavelength group.

In some embodiments, the free spectral range (FSR) of the transmit multiplexers and receive multiplexers includes all the wavelength channels of the transmitters of the data servers within the data center network.

In some embodiments, the master server is configured to identify a first and a second data server storing data related to a same application or a same type, and wherein the data to be transferred from the first to the second data server includes the data related to a same application or a same type, thereby consolidating the related data on the second data server.

In some embodiments, the master server is configured to detect a data server having an excessive activity state, e.g. the first data server having a microprocessor exceeding an operating threshold or temperature, and transfer data in a manner that reduces the activity state.

In some embodiments, an optical transmitter and an optical receiver are coupled to a data path of an edge router, and the optical cross-connect is configured to selectively interconnect some data servers with the edge router.

Various further embodiments provide a system, e.g. a data center network, comprising a master server and a plurality of data servers. Each data server includes a transceiver configured to receive and emit an optical signal at a wavelength channel. A transceiver coupled to a data path of the master server is configured to receive and emit an optical signal via a switching system as described above in a wavelength range that includes all the wavelength channels of the data servers within the data center network.

Various embodiments further provide a method, e.g. performed at an optical switching system as described above. The method includes controlling the optical cross-connect to successively connect the master server with each data server of a group of data servers. An analysis is performed of the data stored in each data server of the group of data servers, e.g. to identify a storage inefficiency of data on the data servers. Data to be transferred between a first data server and a second data server is identified, the transfer of which reduces the storage inefficiency, e.g. by grouping on a same data server data that is distributed among more than one data server prior to the transfer. The optical cross-connect is reconfigured to implement the transfer of the identified data from the first data server to the second data server via the optical cross connect.

Various further embodiments provide a computer program comprising executable code that when executed by a computer performs one or more of the methods as described above.

### Brief description of the drawings

These and other aspects of the invention will be apparent from and elucidated with reference to the embodiments described hereinafter, by way of example, with reference to the drawings.
Figure 1 illustrates a data center network according to an embodiment, including an optical switching system configured to provide a communication path between a master server and a plurality of data servers; and
Figure 2 illustrates an optical switching system, according to an embodiment, that may be used in the data center network of Figure 1.

### Detailed description of the embodiments

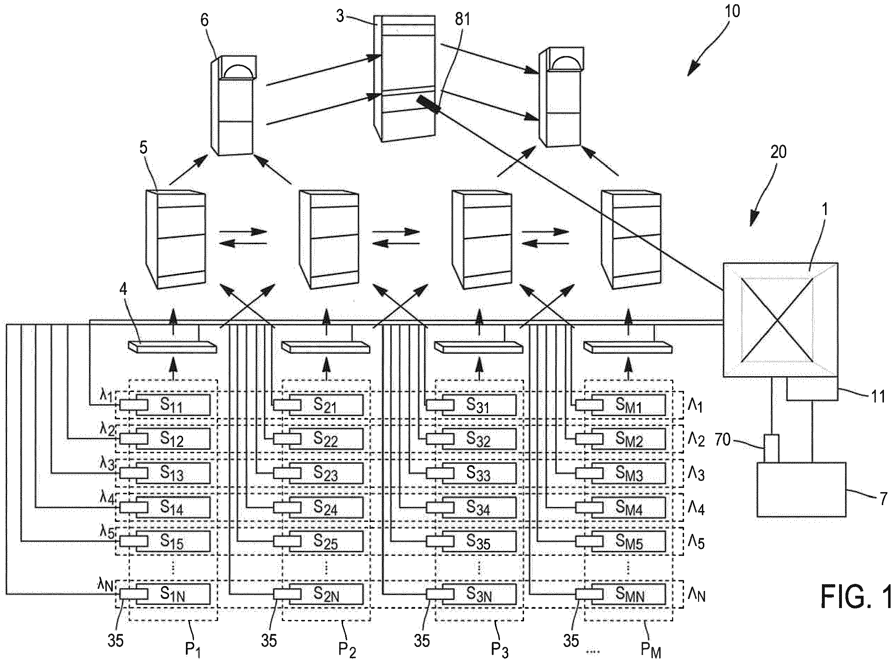

Referring first to Figure 1, an embodiment is shown of a data center network 10 that includes a plurality of data servers 2. Each one of the data servers *S*₁₁,... *S_{MN}* may be connected to an edge router 3 through a conventional electrical switching architecture. In particular, the data center network 10 may include a plurality of access layer switches 4, a plurality of aggregation layer switches 5, and a plurality of core layer switches 6. Each data server *S*₁₁,... *S_{MN}* is connected directly to one of the access layer switches 4. Each access layer switch 4 is connected to at least one aggregation layer switch 5. All of the aggregation layer switches 5 are preferably connected to each other by the plurality of core layer switches 6. Each aggregation layer switch 5 is connected to the edge router 3 by one of the core layer switches 6.

In addition to the conventional electrical switching architecture, the data center network 10 includes an optical cross-connect (OxC) 1 that is configurable to selectively connect a master server 7 to some of the data servers *S*₁₁,... *S_{MN}* via optical signals.

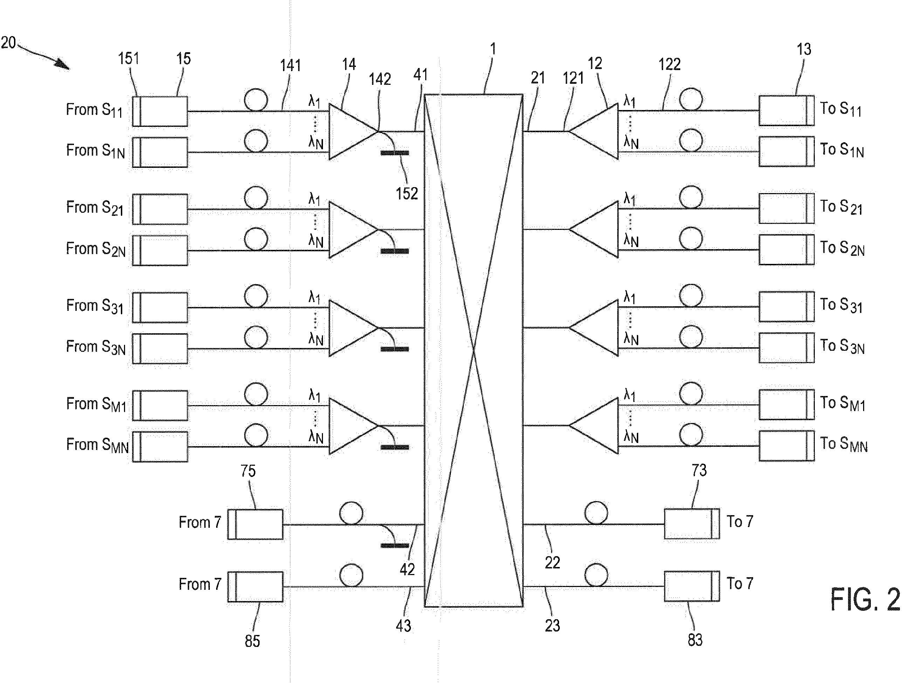

The master server 7 controls the OxC 1 via a control plane 11 to implement a desired switching connectivity in the switching plane of the OxC 1, as described further below. The master server 7 may in particular send commands to the control plane 11 via an electrical connection. The master server 7 also is optically connected to the OxC 1. The master server 7 communicates with the data servers *S*₁₁,... *S_{MN}* via an optical transceiver 70 that will be described further in relation to figure 2.

As will be described further below, the data servers *S*₁₁,... *S_{MN}* are organized into physical groups P₁...P_{M}, and wavelength groups Λ₁ ...Λ*_{N}*. Each physical group includes a number of data servers *S*₁₁,... *S_{MN}* each of which is configured via its corresponding transceiver 35 to communicate with OxC 1 via a different optical wavelength, or equivalently wavelength channel, e.g. having a center wavelength selected from *λ*₁, ...*λ_{N}*. The data servers *S*₁₁,...*S_{MN}* may optionally further be physically associated, such as by being located within a same server rack. Each of the data servers *S*₁₁,... *S_{MN}* in a particular wavelength group, e.g. Λ₁, is configured via its corresponding transceiver 35, to communicate with the OxC 1 using a same wavelength channel. For example, the data servers *S*₁₁,... *S*_{*M*1} in the Λ₁ wavelength group are configured to communicate via a wavelength channel with a center wavelength of *λ*₁.

Turning now to Figure 2, an optical switching system 20 is illustrated according to various embodiments. The system 20 includes the OxC 1, a plurality of transmit multiplexers 14, and a plurality of receive multiplexers 12. Each multiplexer 12 includes a common port 121 and number of data ports 122. Similarly, each multiplexer 14 includes a common port 142 and number of data ports 141.

Each common port 142 of the transmit multiplexers 14 is optically coupled to a corresponding input port 41 of the OxC 1. The input ports 41 may be configured to receive at least one channel of a WDM signal from the corresponding multiplexer 14. Each common port 121 of the receive multiplexers 12 is optically coupled to a corresponding output port 21 of the OxC 1. Each data port 141 of the multiplexers 14 is optically coupled to a corresponding optical transmitter 15, and each data port 122 of the multiplexers 12 is optically coupled to a corresponding optical receiver 13. Each corresponding transmitter 15/receiver 13 pair may be referred to as a transceiver 35.

In addition to the transmitters 15 and the receivers 13, the system 20 includes a transmitter 75 and a receiver 73. The transmitter 75 is optically coupled to an input port 42 of the OxC 1, and the receiver 73 is optically coupled to an output port 22 of the OxC 1. The transmitter 75/receiver 73 pair may be referred to as a transceiver 70. The transceiver 70 is configured to receive and emit an optical signal in a wavelength range including all the wavelength channels of the data servers *S*₁₁,... *S_{MN}* within the data center network 10. The transceiver 70 is located to provide an optical communication path between the master server 7 and the data servers *S*₁₁,... *S_{MN}* through the OxC 1.

Each transmitter 15 is configured to convert an electrical representation of an output data path of a corresponding one of the data servers *S*₁₁,... *S_{MN}* into an optical signal on one wavelength channel in a wavelength group Λ₁ ... Λ*_{N}*. This aspect is described in greater detail below. Each receiver 13 is configured to receive an optical signal at one of the wavelength channels and to convert the signal into an electrical representation of data modulated onto the received wavelength channel, and to couple the converted data to an input data path of the same data server *S*₁₁,... *S_{MN}.*

The OxC 1 is configurable to switch any WDM signal received at one of its input ports 41 to any of its output ports 21. In one embodiment, the OxC 1 may be implemented as an optical space switching matrix (OSSM), which may be implemented with diverse technologies, e.g. MEMS-operated reflectors or piezoelectric optical beam steering.

Each of the transmit multiplexers 14 is configured to multiplex the signals received from a corresponding one of the data servers *S*₁₁,... *S_{MN}* at the data ports 141 into a WDM output signal outputted to the OxC input port 41.Each of the receive multiplexers 12 includes a wavelength multiplexer that comprises a common port 121 optically connected to a corresponding one of the OxC output ports 21, and a plurality of data ports 122. Each of the data ports 122 is configured to be optically connected to a corresponding one of the receivers 13, each of which is connected to a different one of the data servers 2. The receive multiplexers 12 are each configured to separate the WDM signal outputted at the OxC output port 21 into demultiplexed signals, each demultiplexed signal carrying a different wavelength channel, each demultiplexed signal being outputted to a receiver 13 of a different data server *S*₁₁,... *S_{MN}.* Those skilled in the art will appreciate that the multiplexer 12 performs a demultiplexing function as configured in the system 20, and that the multiplexer 12 may be equivalently referred to as "demultiplexer 12" without loss of definiteness or generality.

"Optically connected" or "optically coupled" means connected or placed in communication through an optical link. An optical link may be an optical fiber and in particular a single-mode optical fiber (SMF) or a multimode fiber (MMF) exploiting for example Orbital Angular Momentum techniques or any other type of fiber able to transport a WDM signal with a sufficient quality. The optical link may be configured to transmit optical signals in one or both directions.

In some embodiments in which the optical link is configured to transmit optical signals in both directions, the transmit multiplexers 14 may function in one direction in a similar way as the receive demultiplexers 12 in the other direction.

In some embodiments, the receive multiplexers 14 and transmit demultiplexers 12 may be capable of dense wavelength division multiplexing (DWDM). In a DWDM system optical signals may be frequency-multiplexed around 1550 nm to leverage the capabilities (and cost) of erbium doped fiber amplifiers (EDFAs) or semiconductor optical amplifiers (SOA) when extra amplification is needed, which are effective for wavelengths between approximately 1525-1565 nm (C band), or 1570-1610 nm (L band).

In some other embodiments the transmit multiplexers 14 and receive demultiplexers 12 are configured to support coarse wavelength division multiplexing (CWDM). In a CWDM system, two (or possibly more) signals may be multiplexed onto a single fiber. Generally at least one signal is in the 1550 nm band, and one other is in the 1310 nm band.

In some cases CWDM technology may be preferred to the DWDM technology for cost reasons, provided that the number of channels fits with the requirements of the data center.

The minimum necessary size of the OxC 1 may depend on the size of the data center. As an example, the total physical connectivity of a 256x256 OxC 1 together with 32 channels optical multiplexers 12 and 14 is 8192, which is expected to be large enough to cover the need of the majority of the data centers.

The transmitter 15 may each include a Reflective Semiconductor Optical Amplifier (RSOA) light source. An RSOA source is generally capable of providing a high-power broadband light source that may be used as an external modulator. A laser may be produced through a Fabry-Perot cavity created between a first highly reflective coating layer 151 deposited on a distal end of a Semiconductor Optical Amplifier (SOA) and a second highly reflective coating layer 152 located at the output 142 of multiplexed output of the transmit multiplexer 14. Multiple transmitters 15 connected to a same transmit multiplexer 14 may create a Fabry-Perot cavity with the same second highly reflective coating layer 152. The receiver 13 may be a photodiode. A transceiver 35 may be a small form-factor pluggable transceiver supporting a transmission rate of 10 Gigabit/s (10G) using a Small Form Factor Pluggable (XFP, SFP or SFP+) transceiver connected to a server. Other modules like CFP, CFP2, CFP4 and CFP8 may be considered for higher capacities.

Referring again to Figure 1, the control plane 11 may include an application programming interface (API) for building application software that can be used for increased intra data center data analytics, data center optimization, putting in place optical bypass between certain servers etc. Those management applications run on top of the control plane.

The control plane 11 may include optimization routines including one or several optimized scenarios. The entry of some parameters may be required for the optimization process to prioritize some scenarios. As used herein, optimize, optimization of storage of data, and similar terms refers to organizing the placement of data within the data center network 10, and in particular the data servers 2, to achieve a beneficial result, such as, without implied limitation, reduction of power consumption, reduction of data latency, reduction of storage space, or reduced wear of components such as disk drives or processors. Any one or more of such beneficial results may be referred to generally as improving the performance of the data servers 2. Such optimization may include, for example, placing data at physical locations that leads to the beneficial result(s), such as locating all data related to a particular user account or a particular virtual machine on a single physical drive, or locating data associated with accounts that are unused at night on a same data server *S*₁₁,... *S_{MN}* so that data server *S*₁₁,... *S_{MN}* can be placed in a low-power mode. However, it is not a requirement that optimization result in a "best" solution, or an absolute minimum of, e.g. power, latency or storage space.

In one embodiment the master server 7 performs a data center optimization method as follows. It is noted that some other embodiments may steps in addition to the steps described here, while some other embodiments may omit one or more of the described steps. Moreover, in some embodiments the described steps may be performed in an order other than the described order.

The master server 7 configures, at a step S1, the OxC 1 to successively connect the master server 7 with each one of a group of data servers *S*₁₁,... *S_{MN}* to reorganize within the data center network 10.

At a step S2, the master server 7 performs an analysis of the data stored in each data server *S*₁₁,... *S_{MN}* in the group selected to reorganize. The master server 7 correlates the data located on each data server *S*₁₁,... *S_{MN}* and maps the placement of the different data in the data center network 10.

At a step S3, the master server 7 identifies data to be transferred between a first data server and a second data server to improve the performance of the data center, the first and the second data server belonging to the group of data servers *S*₁₁,... *S_{MN}* to reorganize.

At a step S4, the master server 7 configures the OxC 1 to connect the master server 7 with the first data server.

At a step S5, the master server 7 configures the OxC 1 to connect the first data server with the second data server to allow data transfer from the first data server to the second data server.

At a step S6, the master server 7 sends a command to the first data server to transfer the identified data to the second data server via the OxC 1 and associated optical connections.

In an embodiment, three types of data transfer are provided that may be performed in parallel and independently:
- A regrouping of data of a same type, e.g. related to the same application, to minimize data transfer latency
- A regrouping of data, e.g. independently of any hosted applications, to be able to put some data servers *S*₁₁,... *S_{MN}* in sleep mode
- Transfer of data from a first server 2 to another server *S*₁₁,... *S_{MN}* to share load, e.g. when the processing load of the first server is determined to be too high.

If the data center optimization process requires the interconnection of a number of data servers *S*₁₁,... *S_{MN}* larger than the offered logical connectivity of the OxC 1, the master server 7 may successively perform steps S1 to S6 for different subgroups of the group of data servers *S*₁₁,... *S_{MN}* to reorganize.

In an embodiment the free spectral range (FSR) of the transmit multiplexers 14 and receive demultiplexers 12 (see Figure 2) includes all the wavelength channels of the data servers *S*₁₁,... *S_{MN}* within the data center network 10. In this embodiment, the OxC 1 is able to connect any data server S₁₁,... *S_{MN}* to any other data server *S*₁₁,... *S_{MN}* within the data center. In that case, the group of data servers *S*₁₁,... *S_{MN}* to reorganize may include all the data servers *S*₁₁,... *S_{MN}* within the data center network 10.

In another embodiment, the FSR of the transmit multiplexers 14 and receive demultiplexers 12 is not sufficient to include all the wavelength channels. In this case, the data servers *S*₁₁,... *S_{MN}* may be organized into wavelength groups Λ₁ ...Λ*_{N}* of data servers 2, wherein all the data servers *S*₁₁,... *S_{MN}* that belong to a same wavelength group Λ₁ ...Λ*_{N}* are configured to emit and receive optical signals on a same wavelength channel. The data servers *S*₁₁,... *S_{MN}* are additionally organized into physical groups P₁,...P_{N} of data servers, all the data servers belonging to a same physical group P₁,...P_{N} being connected to the a same OxC input port 41 through a same transmit multiplexer 14 and to the same OxC output port 21 through a same receive demultiplexer 12. A physical group P₁,...P_{N} includes only one data server of a same wavelength group Λ₁ ...Λ*_{N}.* A physical group P₁,...P_{N} may for example be located within a rack of servers. In that case, the group of data servers to reorganize may be a wavelength group Λ₁ ...Λ*_{N}* or a subgroup of a wavelength group Λ₁ ...Λ*_{N}.* The master server 7 may successively perform steps S1 to S6 for some and preferably every wavelength group Λ₁ ...Λ*_{N}*.

In various embodiments, the edge router 3 is optically connected to the OxC 1. The edge router 3 may include a transmitter 85 and receiver 83. The transmitter 85 is optically coupled to an input port 43 of the OxC 1, and the receiver 83 is optically coupled to an output port 23 of the OxC 1. The transmitter 85/receiver 83 pair may be referred to as a transceiver 81 (see Figure 1). The transceiver 81 is configured to receive and emit an optical signal in a wavelength range including all the wavelength channels of the data servers *S*₁₁,... *S_{MN}* within the data center network 10.

The transceiver 81 is located to provide an optical data path between the edge router 3 and the data servers *S*₁₁,... *S_{MN}* through the OxC 1, said optical data path bypassing the aggregation layer switches 5 and core layer switches 6. This optical data path provides a low latency and low-power consumption optical path for data flows entering and/or leaving the data center network 10. This optical data path may be used as a high-reliability communication channel for sensitive data entering and/or leaving the data center network 10. Indeed, since the aggregation layer switches 5 are bypassed the risk of failure is reduced. This optical data path may also be used to avoid increasing the burstiness of the traffic profile of the electronic intra-connection that includes the aggregation layer switches 5.

The transceiver 81 may also be located to provide an optical path between the edge router 3 and the master server 7. In various embodiments, the master server 7 may receive control instructions from outside the data center network 10 through this optical path. Alternatively, the transceiver 81 may be located to provide a direct optical path between the edge router 3 and the master server 7 for the master server 7 to receive control instructions from outside the data center network 10.

Elements such as the control plane 11 may be implemented in different manners. The methods described hereinabove may be executed through the use of dedicated hardware as well as hardware capable of executing software in association with appropriate software. When provided by a processor, the corresponding functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read-only memory (ROM) for storing software, random access memory (RAM), and non-volatile storage. Other hardware, conventional and/or custom, may also be included.

Embodiments are not limited to those embodiments explicitly described herein. The appended claims are to be construed as embodying all modification and alternative constructions that may be occurred to one skilled in the art, which fairly fall within the basic teaching here, set forth.

The use of the verb "to comprise" or "to include" and its conjugations does not exclude the presence of elements or steps other than those stated in a claim. Furthermore, the use of the article "a" or "an" preceding an element or step does not exclude the presence of a plurality of such elements or steps. The invention may be implemented by means of hardware as well as software. The same item of hardware may represent several "means".

In the claims, any reference signs placed between parentheses shall not be construed as limiting the scope of the claims.

## Claims

1. An optical switching system (20), comprising;
an optical cross-connect (1) having a plurality of input ports (41, 42, 43) and a plurality of output ports (21, 22, 23);
a plurality of optical transmit multiplexers (14) each having a plurality of data ports (141) and a common port (142) connected to a corresponding one of the plurality of input ports (41, 42, 43);
a plurality of optical receive demultiplexers (12) each having a plurality of data ports (122) and a common port (121) connected to a corresponding one of the plurality of output ports (21, 22, 23);
a plurality of optical transmitters (15, 75, 85) each being optically coupled to a corresponding one of the data ports (141) of the transmit multiplexers (14); and
a plurality of optical receivers (13, 73, 83) each being optically coupled to a corresponding one of the data ports (122) of the receive multiplexers (12).

2. The optical switching system (20) of Claim 1, wherein each of the optical transmitters (15, 75, 85) includes a Reflective Semiconductor Optical Amplifier - RSOA- light source, and wherein a laser is formed between a mirror (151) of the RSOA and a mirror (152) coupled to the common port (142) of the corresponding transmit multiplexer (14).

3. The optical switching system (20) of Claim 1 or 2, wherein some optical transmitters (15) and some optical receivers (13) are coupled to a data path of a corresponding one of a plurality of data servers (*S*₁₁,... *S_{MN}*), and the optical cross-connect (1) is configured to selectively interconnect a first of said data servers (*S*₁₁,... *S_{MN}*) with a second of said data servers (*S*₁₁,... *S_{MN}*).

4. The optical switching system (20) of Claim 3, further comprising a master server (7) configured to control the optical cross-connect (1) to reconfigure interconnectivity between the data servers (*S*₁₁,... *S_{MN}*) to improve performance of the data servers (*S*₁₁,... *S_{MN}*).

5. The optical switching system (20) of Claim 4, wherein one optical transmitter (75) and one optical receiver (73) are coupled to a data path of the master server (7), and the optical cross-connect (1) is configured to selectively interconnect some data servers (*S*₁₁,... *S_{MN}*) with the master server (7).

6. The optical switching system (20) of Claim 4 or 5, wherein the master server (7) is configured to:
identify data stored on a first of said data servers (*S*₁₁,... *S_{MN}*) that when transferred to a second of said data servers (*S*₁₁,... *S_{MN}*) will improve the performance of one or more of said data servers, and
control said first and second data servers and said optical cross connect (1) to implement the transfer of said data.

7. The optical switching system (20) of Claim 6, wherein the master server (7) is configured to successively perform the steps of claim 6 for different subgroups of the data servers (*S*₁₁,... *S_{MN}*).

8. The optical switching system (20) of Claim 3, wherein a subset of the plurality of data servers (*S*₁₁,... *S_{MN}*) are optically coupled to one of said transmit multiplexers such that each data server (*S*₁₁,... *S_{MN}*) of said subset is configured to communicate via a different optical channel wavelength.

9. The optical switching system (20) of Claim 8, wherein all the data servers (*S*₁₁,... *S_{MN}*) of the subset are connected to a same access layer switch.

10. The optical switching system (20) of Claim 6, wherein the master server (7) is configured to identify a first and a second data server (*S*₁₁,... *S_{MN}*) storing data related to a same application or a same type, and wherein the data to be transferred from the first to the second data server includes the related data.

11. The optical switching system of Claim 6, wherein the master server (7) is configured to detect a data server (*S*₁₁,... *S_{MN}*) having a micro-processor in an excessive activity state, and wherein the first server is the data server (*S*₁₁,... *S_{MN}*) having said micro-processor.

12. The optical switching system of Claim 1 or 2, wherein one optical transmitter (85) and one optical receiver (83) are coupled to a data path of an edge router (3), and the optical cross-connect (1) is configured to selectively interconnect some of the data server (*S*₁₁,... *S_{MN}*) with the edge router (3).

13. A data center network (10) comprising:
a master server (7) including an optical transmitter (75) and an optical receiver (73), a plurality of data servers (*S*₁₁,... *S_{MN}*), each data server (*S*₁₁,... *S_{MN}*) including an optical transmitter (15) and an optical receiver (13) configured to respectively emit and receive an optical signal at a wavelength channel, and
an optical switching system (20) according to any of claims 1 to 12,
wherein the optical transmitter (75) and optical receiver (73) of the master server (7) are configured to respectively emit and receive an optical signal in a wavelength range including all the wavelength channels of the optical transmitters (15) and optical receivers (13) of the data servers (*S*₁₁,... *S_{MN}*).

14. A method performed at an optical switching system (20) according to any of claims 1 to 12, in a data center network (10) according to claim 13, the method including:
controlling the optical cross-connect (1) to successively connect the master server (7) with each data server (*S*₁₁,... *S_{MN}*) of a group of data servers (*S*₁₁,... *S_{MN}*) to reorganize,
performing an analysis of the data stored in each data server *(S*₁₁,... *S_{MN}*) of the group of data servers (*S*₁₁,... *S_{MN}*) to reorganize,
identifying data to be transferred between a first data server and a second data server to optimize the storage of the data in the data center network (10), the first and the second data servers (*S*₁₁,... *S_{MN}*) belonging to the group of data servers (*S*₁₁,... *S_{MN}*) to reorganize,
configuring the optical cross-connect (1) to connect the master server (7) with the first data server,
configuring the optical cross-connect (1) to connect the first data server with the second data server to allow data transfer from the first data server to the second data server, and
sending a command to the first data server to transfer the identified data to the second data server via the optical cross-connect (1).

15. A computer program comprising executable code that when executed by a computer performs all the steps of a method in accordance with claim 14 when executed.
